# EUROPEAN PATENT SPECIFICATION

(11) **EP 1 153 249 B1**
(45) Date of publication and mention of the grant of the patent: **31.08.2005**
(21) Application number: 00904131.0
(22) Date of filing: 03.02.2000
(51) Int. Cl.: F24F 12/00

(54) **VENTILATION UNIT**
LÜFTUNGSANLAGE
UNITE DE VENTILATION

(30) Priority: 03.02.1999 NL 1011206
(43) Date of publication of application: 14.11.2001
(73) Proprietor: Hemmes, Barend Jan Marinus, 3816 AS Amersfoort (NL)
(72) Inventor: Hemmes, Barend Jan Marinus, 3816 AS Amersfoort (NL)
(74) Representative: Kupecz, Arpad
(86) International application number: PCT/NL2000/000069
(87) International publication number: WO 2000/046554

(56) References cited:
- WO-A-95/25935
- WO-A-96/27767
- DE-A- 2 509 038
- DE-A- 4 243 429
- FR-A- 2 529 308

## Description

The present invention relates to a ventilation unit comprizing a main supply and a main discharge from and to the outside air, as well as a supply connection and a drain connection for the room to be ventilated, which ventilation unit comprizes at least a first heat exchanger and a cooling unit.

Such a ventilation unit is known to a man skilled in the art, and comprizes a cross-current plate heat exchanger and is used for ventilating rooms of swimming-pools, buildings and such, and is used as a so-called recirculation drying unit. A ventilation unit according to the preambles of claim 1 and claim 2 is known from document DE-4-2 509 038.

According to the invention a ventilation unit is proposed, which comprizes a second heat exchanger which is connected with regard of the supply air downstream of the first heat exchanger, wherein to the first heat exchanger are connected a primary supply pipe for outside air which is also connected to the main supply pipe, as well as a primary discharge pipe which is directed to the secondary supply pipe of the first heat exchanger via the cooling unit, wherein the secondary discharge pipe from the first heat exchanger supplies a primary discharge pipe of the second heat exchanger, the primary discharge pipe of which is connected to the supply connection for the room to be ventilated, and wherein the secundary circuit of the second heat exchanger at its entrance is connected to the discharge connection of the room to be ventilated, and at its exit side is connected to the main discharge. In this regard it is not important what kind of heat exchangers are used; if such is more convenient with regard to the piping installation, a heat exchanger for example can be installed mirror-wise with regard to a normal implementation. According to a second embodiment of the invention it is possible to incorporate a second heat exchanger upstream of the first heat exchanger, in the primary supply pipe for the outside air. It is also possible to incorporate both heat exchangers comprizing a common axis. It is also within the scope of the present invention to incorporate further parts to the ventilation unit, like heaters, coolers, valves, and by-pass provisions so as to yield specific embodiments for specific uses.

In this regard it may be advantageous that the first and the second heat exchanger are so-called high-efficiency heat exchangers. It is preferred to used plate-type heat exchangers, the most preferred being the counter-current heat exchangers.

The ventilation unit according to the present invention provides a unit which has high energy-saving properties for drying air, wherein the dehumidification by the cooler barely influences the supply temperature and wherein the second heat exchanger provides the supply air with the intended (room)temperature. The drying property of the unit renders it possible to use a smaller amount of ventilation in, for example, swimming-pools, whereas for performing a comfort airconditioning by adiabatic cooling with the return air from the room to be ventilated or in the room, a high cooling performance can be obtained. According to the second embodiment of the ventilation unit according to the present invention, especially drying and cooling of air can be performed certainly.

The ventilation unit according to the invention will now be explained by way of a schematic drawing of an embodiment of the ventilation unit according to the invention.

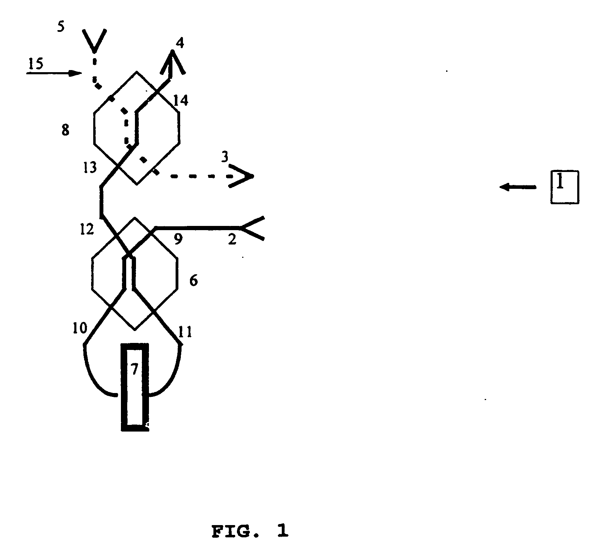

In the drawing, figure 1 shows the flow chart of the ventilation unit according to the invention which is preferred especially in summertime situations.

The ventilation unit according to the invention is indicated in the figures by the reference numeral 1. This ventilation unit 1 is provided with a main supply pipe 2 and a main discharge pipe 3 from and to the outside air as well as a supply connection 4 and a drain connection 5 for the room to be ventilated. The ventilation unit 1 further comprizes a first heat exchanger 6 and a cooling unit 7 and furthermore a second heat exchanger 8 which is connected downstream of the supply air after the first heat exchanger 6. To the first heat exchanger 6 a primary supply pipe 9 for outside air has been connected which is connected to the main supply pipe 2, as well as a primary discharge pipe 10 which is directed, via cooling unit 7, to the secondary supply pipe 11 of the first heat exchanger 6. The secondary discharge pipe 12 of the first heat exchanger 6 feeds a primary supply pipe 13 of the second heat exchanger 8, and the primary discharge pipe 14 of the second heat exchanger 8 is connected to the supply connection 4 of the room to be ventilated. The secondary circuit of the second heat exchanger 8 is at its entrance connected to the discharge connection 5 of the room to be ventilated and at its exit it is connected to the main discharge 3. When in use, outside air flows via the main supply 2 and the supply pipe 9 through the first heat exchanger 6, thereby being cooled before said air flows through the cooler 7. By cooling by means of said cooler 7 to a sufficiently low temperature, in the first heat exchanger 6 condensation may occur, such that said cooler 7 does not have to cool any perceptible heat. This effect is more pronounced when the cooling by cooler 7 is lower (i.e. to a lower temperature). The air which exits the first heat exchanger 6 finally via the secundary discharge pipe 12 has, because of the high efficiency type of the first heat exchanger 6, a slightly lower temperature than the incoming air, but has become much dryer. In the second heat exchanger 8 subsequently heat is exchanged with air which is coming from the room to be ventilated. For obtaining an effective cooling this room or the return air may be humidified before entrance into the second heat exchanger 8 (at 15), with water, for example, cold water from the cooler 7, such that the room temperature or the supply air temperature, respectively (by heat exchange with the return air) will drop. The use of the ventilation unit according to the invention with swimming-pools obtains the advantage that, when the outside air has a high humidity, only relatively low amounts of air must be ventilated for obtaining the necessary discharge of moisture.

If the humidity level of the outside air is lower than the desired value, the well-known high-efficiency heat recovery situation may be obtained by short-cutting 9 to 13.

If the second heat exchanger is incorporated into the ventilation unit upstream the first heat exchanger, so as to say between the main supply 2 and the main supply pipe 9 for outside air, an embodiment is obtained which is especially suitable for use with the situation that drying and cooling at the same time are requested. In that case the outside air which is supplied will be connected via the main supply 2 with the primary supply pipe 13 of the second heat exchanger 8, and the primary discharge pipe 14 of the second heat exchanger 8 will be connected to the primary supply pipe 9 of the first heat exchanger 6. The secondary circuit of the second heat exchanger 8 is realized like the embodiment as shown in figure 1. The secondary circuit of the first heat exchanger 6 is at its exit connected to the supply connection 4 for the room to be ventilated.

Besides the advantages as mentioned above of the ventilation unit according to the invention, to wit the low energy consumption because of the high efficiency of the ventilation unit, it renders it possible to perform the ventilation by using a smaller amount of air which has the consequence that the ventilation system can be smaller than usual. It also renders it possible to obtain a higher drying and/or cooling capacity by using the same amount of air. And also it is an advantage of the present ventilation unit according to the invention that the several air flows are separated from each other such that no risk of contamination is obtained while, during dehumidification, the supply air is purified.

It will be clear that the invention is not restricted to the embodiments as mentioned herein before and as shown in the figure. The invention is only limited by the claims. For example, if in a practical situation such is preferred, the heat exchangers may be accommodated into one housing, together with a cooler, but it is also possible that all said components are accommodated in different rooms. For example, if buildings comprize more than one room to be ventilated, the dehumidification part can be accommodated in a central room, whereas one or more heat exchangers are provided for each different room. Furthermore it is possible according to the second embodiment of the invention as mentioned herein before, to provide the second heat exchanger as a so-called regenerative heat exchanger, which yields the advantage that any moisture transfer may be obtained in the second heat exchanger.

## Claims

1. Ventilation unit (1) comprising a main supply (2) and a main discharge (3) from and to the outside air, as well as a supply connection (4) and a discharge connection (5) for a room to be ventilated, which ventilation unit (1) comprises at least a first heat exchanger (6) and a cooling unit (7), **characterized in that**, it is provided with a second heat exchanger (8) which is connected with regard of the supply air downstream of the first heat exchanger, that to the first heat exchanger are connected a primary supply pipe (9) for outside air, which is also connected to the main supply (2), as well as a primary discharge pipe (10) which via the cooling unit (7) leads to a secondary supply pipe (11) of the first heat exchanger (6), that a secondary discharge pipe (12) of the first heat exchanger (6) feeds a primary supply pipe (13) of the second heat exchanger (8), a primary discharge pipe (14) of which is connected to the supply connection (4) for the room to be ventilated, and that a secondary circuit of the second heat exchanger (8) at its entrance is connected to the discharge connection (5) of the room to be ventilated and at its exit is connected to the main discharge (3).

2. Ventilation unit comprising a main supply (2) and a main discharge (3) from and to the outside air, as well as a supply connection (4) and discharge connection (5) for a room to be ventilated, which ventilation unit (1) comprises at least a first heat exchanger (6) and a cooling unit (7), **characterized in that** it comprises a second heat exchanger (8) which is connected into the flow direction of the supply air upstream of the first heat exchanger, that to the first heat exchanger are connected a primary supply pipe (9) as well as a primary discharge pipe (10) which, via the cooling unit (7) leads to a secondary supply pipe (11) of the first heat exchanger (6), that a secondary discharge pipe (12) of the first heat exchanger (6) is connected to the supply connection (4) of the room to be ventilated, wherein the main supply (2) feeds a primary supply pipe (13) of the second heat exchanger (8), a primary discharge pipe (14) of which is connected to the primary supply pipe (9) of the first heat exchanger (6) and that a secondary circuit of the second heat exchanger (8) at its entrance is connected to the discharge pipe (5) of the room to be ventilated, and at its exit is connected to the main discharge (3).

3. Ventilation unit according to Claim 1 or 2, **characterized, in that** the first (6) and second (8) heat exchanger are of the counter-current type.

4. Ventilation according to Claims 1 to 3, **characterized, in that** means (15) are provided for adding a humidifying agent to the air which comes from the room to be ventilated, before heat exchanging said air in the second heat exchanger.

5. Ventilation unit according to claim 4, **characterized, in that** means (15) are provided for supplying water from cooling unit (7) to the return air from the room to be ventilated.

## Patentansprüche

1. Lüftungsanlage (1) mit einer Hauptzufuhr (2) und einem Hauptauslass (3) von und zu der Umgebungsluft, sowie mit einer Zufuhrverbindung (4) und einer Auslassverbindung (5) für einen zu belüftenden Raum, wobei die Lüftungsanlage (1) wenigstens einen ersten Wärmetauscher (6) und eine Kühleinrichtung (7) aufweist,
**dadurch gekennzeichnet,**
**dass** sie mit einem zweiten Wärmetauscher (8) ausgestattet ist, der bezüglich der zugeführten Luft stromabwärts vom ersten Wärmetauscher angeordnet ist, dass mit dem ersten Wärmetauscher eine Primärzufuhrleitung (9) für Umgebungsluft verbunden ist, die ebenfalls mit der Hauptzufuhr (2) verbunden ist, sowie eine Primärauslassleitung (10), die über die Kühleinrichtung (7) zu einer Sekundärzufuhrleitung (11) des ersten Wärmetauschers (6) führt,
**dass** eine Sekundärauslassleitung (12) des ersten Wärmetauschers (6) eine Primärzufuhrleitung (13) des zweiten Wärmetauschers (8) speist, dessen eine Primärauslassleitung (14) mit der Zufuhrverbindung (4) für den zu belüftenden Raum verbunden ist, und
**dass** ein Sekundärkreislauf des zweiten Wärmetauschers (8) an seinem Eingang mit der Auslassverbindung (5) des zu belüftenden Raums und an seinem Ausgang mit dem Hauptauslass (3) verbunden ist.

2. Lüftungsanlage mit einer Hauptzufuhr (2) und einem Hauptauslass (3) von und zu der Umgebungsluft, sowie mit einer Zufuhrverbindung (4) und einer Auslassverbindung (5) für einen zu belüftenden Raum, wobei die Lüftungsanlage (1) wenigstens einen Wärmetauscher (6) und eine Kühleinrichtung (7) aufweist,
**dadurch gekennzeichnet,**
**dass** sie einen zweiten Wärmetauscher (8) aufweist, der in Strömungsrichtung der Luftversorgung stromaufwärts vom ersten Wärmetauscher angeordnet ist,
**dass** mit dem ersten Wärmetauscher eine Primärzufuhrleitung (9) sowie eine Primärauslassleitung (10), die über die Kühleinrichtung (7) zu einer Sekundärzufuhrleitung (11) des ersten Wärmetauscher (6) führt, verbunden
ist,
**dass** eine Sekundärauslassleitung (12) des ersten Wärmetauschers (6) mit der Zufuhrverbindung (4) des zu belüftenden Raums verbunden ist, wobei die Hauptzufuhr (2) eine Primärzufuhrleitung (13) des zweiten Wärmetauschers (8) speist, von dem eine Primärauslassleitung (14) mit der Primärzufuhrleitung (9) des ersten Wärmetauschers (6) verbunden ist, und dass ein Sekundärkreislauf des zweiten Wärmetauschers (8) an seinem Eingang mit der Auslassleitung (5) des zu belüftenden Raums und an seinem Ausgang mit dem Hauptauslass (3) verbunden ist.

3. Lüftungsanlage nach Anspruch 1 oder 2, **dadurch gekennzeichnet, dass** der erste (6) und zweite (8) Wärmetauscher vom Gegenstrom-Typ ist.

4. Lüftungsanlage nach Anspruch 1 bis 3, **dadurch gekennzeichnet, dass** Mittel (15) zum Hinzufügen eines Befeuchtungsmittels zur Luft, die vom zu belüftenden Raum kommt, vorgesehen sind, bevor der Wärmetauschvorgang der Luft im zweiten Wärmetauscher stattfindet.

5. Lüftungsanlage nach Anspruch 4, **dadurch gekennzeichnet, dass** Mittel (15) zum Zuführen von Wasser von der Kühleinrichtung (7) zu der vom zu belüftenden Raum zurückkehrenden Luft vorgesehen sind.

## Revendications

1. Unité de ventilation (1) comprenant une source d'alimentation principale (2) et une décharge principale (3) à partir de et vers l'air extérieur, ainsi qu'une connexion d'alimentation (4) et une connexion de décharge (5) pour une pièce destinée à être ventilée, ladite unité de ventilation (1) comprend au moins un premier échangeur de chaleur (6) et une unité de refroidissement (7), **caractérisée en ce qu'**elle est dotée d'un second échangeur de chaleur (8) qui est connecté par rapport à l'air fourni en aval du premier échangeur de chaleur, **en ce qu'**au premier échangeur de chaleur sont connectés un tuyau d'alimentation primaire (9) pour l'air extérieur, qui est également connecté à la source d'alimentation principale (2), ainsi qu'un tuyau de décharge primaire (10) qui via l'unité de refroidissement (7) mène à un tuyau d'alimentation secondaire (11) du premier échangeur de chaleur (6), **en ce qu'**un tuyau de décharge secondaire (12) du premier échangeur de chaleur (6) alimente un tuyau d'alimentation primaire (13) du second échangeur de chaleur (8), dont un tuyau de décharge primaire (14) est connecté à la connexion d'alimentation (4) pour la pièce destinée à être ventilée et **en ce qu'**un circuit secondaire du second échangeur de chaleur (8) à son entrée est connecté à la connexion de décharge (5) de la pièce destinée à être ventilée et à sa sortie est connecté à la décharge principale (3).

2. Unité de ventilation comprenant une source d'alimentation principale (2) et une décharge principale (3) à partir de et vers l'air extérieur, ainsi qu'une connexion d'alimentation (4) et une connexion de décharge (5) pour une pièce destinée à être ventilée, ladite unité de ventilation (1) comprend au moins un premier échangeur de chaleur (6) et une unité de refroidissement (7), **caractérisée en ce qu'**elle comprend un second échangeur de chaleur (8) qui est connecté dans la direction de flux de l'air fourni en amont du premier échangeur de chaleur, **en ce qu'**au premier échangeur de chaleur sont connectés un tuyau d'alimentation primaire (9) ainsi qu'un tuyau de décharge primaire (10) qui, via l'unité de refroidissement (7) mène à un tuyau d'alimentation secondaire (11) du premier échangeur de chaleur (6), **en ce qu'**un tuyau de décharge secondaire (12) du premier échangeur de chaleur (6) est connecté à la connexion d'alimentation (4) de la pièce destinée à être ventilée, dans laquelle la source d'alimentation principale (2) alimente un tuyau d'alimentation primaire (13) du second échangeur de chaleur (8), dont un tuyau de décharge primaire (14) est connecté au tuyau d'alimentation primaire (9) du premier échangeur de chaleur (6) et **en ce qu'**un circuit secondaire du second échangeur de chaleur (8) à son entrée est connecté au tuyau de décharge (5) de la pièce destinée à être ventilée et à sa sortie est connecté à la décharge principale (3).

3. Unité de ventilation selon la revendication 1 ou la revendication 2, **caractérisée en ce que** le premier (6) et le second (8) échangeurs de chaleur sont de type à contre-courant.

4. Unité de ventilation selon l'une quelconque des revendications 1 à 3, **caractérisée en ce que** les moyens (15) sont adaptés pour ajouter un agent d'humidification à l'air qui vient de la pièce destinée à être ventilée, avant l'échange de chaleur dudit air dans le second échangeur de chaleur.

5. Unité de ventilation selon la revendication 4, **caractérisée en ce que** les moyens (15) sont adaptés pour apporter de l'eau de l'unité de refroidissement (7) à l'air de retour de la pièce destinée à être ventilée.
